# EUROPEAN PATENT SPECIFICATION

(11) **EP 3 711 977 B1**
(45) Date of publication and mention of the grant of the patent: **07.06.2023**
(21) Application number: 18878793.1
(22) Date of filing: 08.11.2018
(51) Int. Cl.: B60C 9/00, B60C 9/04, B60C 9/06, B60C 9/08, B60C 9/18, B60C 19/12, B60C 9/11

(54) **BICYCLE-TIRE REINFORCING PLY AND BICYCLE TIRE**
FAHRRADREIFENVERSTÄRKUNGSLAGE UND FAHRRADREIFEN
ÉLÉMENT DE RENFORCEMENT POUR PNEU DE BICYCLETTE, ET PNEU DE BICYCLETTE

(30) Priority: 17.11.2017 JP 2017221518
(43) Date of publication of application: 23.09.2020
(73) Proprietor: KURARAY CO., LTD., Okayama 710-0801 (JP)
(72) Inventor: TAKEMOTO, Shinichi, Okayama-shi, Okayama 702-8601 (JP); KOBAYASHI, Toshiaki, Okayama-shi, Okayama 702-8601 (JP)
(74) Representative: Müller-Boré & Partner Patentanwälte PartG mbB
(86) International application number: PCT/JP2018/041510
(87) International publication number: WO 2019/098121

(56) References cited:
- DE-A1-102005 018 742
- JP-A- H0 641 813
- JP-A- H05 179 531
- JP-A- H11 301 208
- JP-A- S63 232 004
- JP-A- S63 232 005
- JP-A- 2001 301 412
- JP-A- 2003 191 712
- JP-A- 2005 001 547
- JP-A- 2009 051 265
- US-A- 5 785 779
- US-A1- 2002 074 068
- US-A1- 2007 068 614
- US-A1- 2013 312 883

## Description

### CROSS REFERENCE TO THE RELATED APPLICATION

This application is based on and claims Convention priority to Japanese patent application No. 2017-221518, filed November 17, 2017.

### BACKGROUND OF THE INVENTION

The present invention relates to a reinforcing ply capable of enhancing puncture resistance of a bicycle tire and to a bicycle tire having excellent puncture resistance.

Bicycle tires include a carcass part that forms a frame of the tire thereinside and a tread part on a side of a ground contact surface between the ground and the tire. Since the bicycle tires are required to be lightweight, they have a smaller thickness than that of automobile tires. Thus, where there are sharp objects such as nails, glass pieces, and/or metal pieces on the road, such sharp objects may easily penetrate the tread part, causing damage to or puncture of a bicycle tire.

In order to enhance cut resistance and puncture resistance of bicycle tires, for example, Patent Document 1 (JP Laid-open Patent Publication No. 59-199305) discloses a bicycle tire provided with at least one layer of a breaker embedded between carcass plies located immediately below a tread part of the tire.

### [Related Document]

### [Patent Document]

[Patent Document 1] JP Laid-open Patent Publication No. 59-199305

### SUMMARY OF THE INVENTION

Patent Document 1, however, merely determines absorption of external energy by a tire on the basis of indentation caused by pushing a plunger having a diameter of 8 mm into the tire, and this test does not provide any clear information on puncture resistance of the tire to sharp objects (for example, glass pieces, nails, thumbtacks).
Other relevant prior art is known from US 2007/068614 A1, US 2002/074068 A1, JP 2005 001547 A, JP 2001 301412 A and JP S63 232004 A.

Therefore, an object of the present invention is to provide a reinforcing ply capable of enhancing puncture resistance of a bicycle tire and a bicycle tire having excellent puncture resistance.

The inventors of the present invention have conducted extensive studies to achieve the above object and have found that where a woven fabric, as a reinforcing ply of a bicycle tire, is made of polyvinyl alcohol-series (PVA-series) fiber yarns having a specific single fiber diameter, surprisingly, the woven fabric can unexpectedly enhance puncture resistance of the bicycle tire. Thus, the present invention is achieved by a bicycle-tire reinforcing ply according to claim 1.
Further preferred features are defined by the dependent claims 2 and 3.
The present invention further relates to a bicycle tire according to claim 4 which comprises a bicycle-tire reinforcing ply according to any of claims 1-3.

### EFFECT OF THE INVENTION

According to a reinforcing ply of the present invention, formation of the reinforcing ply from a woven fabric comprising PVA-series fiber yarns having a specific average single fiber diameter can enhance puncture resistance of a bicycle tire. In particular, despite that the PVA-series fiber yarns used for the reinforcing ply of the present invention has lower fiber strength than that of so-called high-strength super fibers, surprisingly, the reinforcing ply of the present invention can unexpectedly enhance puncture resistance of a bicycle tire, compared with a reinforcing ply made of high-strength super fibers.

### BRIEF DESCRIPTION OF THE DRAWINGS

The present invention will be more clearly understood from the following description of preferred examples thereof, when taken in conjunction with the accompanying drawings. However, the examples and the drawings are given only for the purpose of illustration and explanation, and are not to be taken as limiting the scope of the present invention in any way whatsoever, which scope is to be determined by the appended claims. In the figures,
Fig. 1 shows a schematic sectional view of a bicycle tire according to an embodiment of the present invention;
Fig. 2 shows a schematic sectional view of a bicycle tire according to another embodiment of the present invention;
Fig. 3 shows a schematic sectional view of a bicycle tire according to another embodiment of the present invention; and
Fig. 4 shows a partial schematic sectional view of a constant-speed penetration test machine for illustrating a penetration test for a reinforcing ply.

### DESCRIPTION OF THE EMBODIMENTS

### Reinforcing Ply (Plies)

A reinforcing ply of the present invention is a bicycle-tire reinforcing ply (plies), the reinforcing ply at least comprising a woven fabric that comprises PVA-series fiber yarns, each of the yarns being formed from a plurality of single fibers. It should be noted that the reinforcing ply or plies may comprise one or more layers of woven fabrics. Where a plurality of layers of woven fabrics are included as reinforcing plies, they may only include woven fabrics comprising PVA-series fiber yarns or may include a combination of a woven fabric comprising PVA-series fiber yarns and a woven fabric made of a material other than the PVA-series fiber yarns.

### Polyvinyl Alcohol-Series Fiber Yarn

The PVA-series fiber yarn refers to strands of fibers made of a PVA series polymer (hereinafter, sometimes referred to as PVA-series fibers) and are constituted by a plurality of PVA-series single fibers having a specific average fiber diameter. In order to enhance puncture resistance of the reinforcing ply, the woven fabric is made of fine fibers, such that the PVA-series fiber yarns have an average single fiber diameter of 45 µm or smaller.

The PVA-series polymer is not particularly limited as long as it contains a vinyl alcohol unit as a main component, and may contain other constituent units (modified units) as desired so long as the effects of the present invention are not deteriorated. The ratio (molar ratio) of the vinyl alcohol unit and the modified unit(s) may be, for example, (vinyl alcohol unit) / (modified unit) = about 85/15 to 100/0.

Although a polymerization degree of the PVA-series polymer constituting the PVA-series fibers may be suitably selected according to the purpose and is not particularly limited, in consideration of strength and the like of resultant fibers, it is preferable that an average polymerization degree calculated from a viscosity of an aqueous solution at 30°C is in a range from about 1000 to 20000, preferably from about 1300 to 15000, and even more preferably from about 1500 to 10000. Although a saponification degree of the PVA-series polymer may also be suitably selected according to the purpose and is not particularly limited, in consideration of strength of resultant fibers as well as adhesive property of resultant fibers to rubber, the saponification degree may be, for example, 90 mol% or higher, preferably 95 mol% or higher, and even more preferably 98 mol% or higher.

The PVA-series fibers used for the present invention may be obtained by dissolving such a PVA-series polymer in a solvent (e.g., a polar solvent, such as water and DMSO) and spinning fibers by any of wet spinning, dry-wet spinning, and dry spinning processes, and may be further subjected to dry hot-drawing if needed. Also, the obtained PVA-series fibers may be subjected to, e.g., acetalization treatment with an aldehyde (preferably, formalization treatment), and they are used in the form of long (continuous) fibers or short fibers. Although the PVA-series fibers may be non-composite fibers made of a PVA-series polymer as a single phase or composite fibers containing a PVA-series polymer and other polymer(s) (for example, core-sheath fibers containing a PVA-series polymer as a core phase or a sheath phase), the fibers are preferably non-composite fibers from an economic point of view. The cross-section of the fibers may have various shapes, such as a substantially circular shape, a bean shape, a polygonal shape, and a star shape, and a bean-shaped or substantially circular cross-section is preferred.

As long as the effects of the present invention are not deteriorated, the PVA-series fiber yarns may also contain an additive(s), including a fire retardant, an antioxidant, a surfactant, a decomposition inhibitor, an antifreezing agent, a pH regulator, a masking agent, a colorant, and an oiling agent, depending on the purpose.

The PVA-series fiber yarns are not particularly limited as long as they can be used as weaving yarns and may be any of filament yarns, spun yarns, and composite yarns. The PVA-series fiber yarns may have a total fineness, i.e., a unit-length fineness based on a reference length of 1000 m and a reference weight of 0.1 g, in a range from, e.g., 100 to 1500 dtex, preferably from 200 to 1300 dtex, and more preferably from 250 to 1000 dtex.

The yarns may be untwisted or twisted to have the number of twists from, e.g., 50 to 1000 T/m and preferably from 100 to 500 T/m. Although the warps and wefts may be twisted in the same direction or in different directions, they are preferably twisted in the same direction.

The PVA-series single fibers constituting the PVA-series fiber yarns may have an average fiber diameter of 45 µm or smaller, preferably from 5 to 45 µm, more preferably from 7 to 40 µm, and even more preferably from 15 to 35 µm. The average fiber diameter may be, for example, measured in accordance with the method described for the Examples below.

For example, the PVA-series fiber yarns (preferably, the PVA-series fiber yarns used as warps) may have a fiber tenacity of, for example, 7 cN/dtex or higher, preferably 8 cN/dtex or higher, and even more preferably 9 cN/dtex or higher. Although an upper limit for the fiber tenacity may be suitably selected depending on fibers and is not particularly limited, the fiber tenacity may be, for example, 30 cN/dtex or lower, or 20 cN/dtex or lower. The fiber tenacity may be measured in accordance with the method described for the Examples below.

The PVA-series fiber yarns may be subjected to post-processing if needed. Preferable post-processing may include bulk texturing such as, for example, twisting/thermally fixing/untwisting, false twisting, stuffing, shaping, edge-crimping, and taslanizing. Of these post-processing, taslanizing is preferred which does not cause stretching and/or shrinkage of fibers. In the taslanizing texturing, high-pressure turbulent air is applied to bundle of filaments in parallel to make the filaments entangled, so that bulky texture can be imparted to the filaments.

The woven fabric may have a sheet form in which warps and wefts are interlaced in accordance with a predetermined rule. For example, woven fabric weaves may include a plain weave, a twill, a satin weave, and a cord weave, and the plain weave and the cord weave are preferred. The PVA-series fiber yarns may be used for both warps and wefts or either warps or wefts. The PVA-series fiber yarns are preferably used at least for warps, and, most preferably, the whole woven fabric is made of the PVA-series fiber yarns.

In order to suppress gaps appeared in a weave, the woven fabric may have a warp density of, for example, 40 yarns/2.54 cm or greater and preferably 45 yarns/2.54 cm or greater. Although the upper limit of the warp density may be suitably selected depending on types of woven fabrics, the warp density may be, for example, 90 yarns/2.54 cm or less. The warp density may be measured in accordance with the method described for the Examples below.

In order to achieve both puncture resistance and light weight, the woven fabric may have a basis weight of preferably 100 g/m² or greater, more preferably 110 g/m² or greater, even more preferably 120 g/m² or greater, particularly preferably 130 g/m² or greater, and most preferably 140 g/m² or greater. On the other hand, in terms of weight reduction of the tire, the woven fabric may have a basis weight of preferably 300 g/m² or lower, more preferably 250 g/m² or lower, and even more preferably 200 g/m² or lower. The basis weight may be measured in accordance with the method described for the Examples below.

In terms of light weight, the woven fabric used per one tire may have a weight (unit: g) of, for example, 15×L or lower, preferably 10×L or lower, and more preferably 5×L or lower and may be, for example, 2×L or greater, where L denotes a circumference of the tire (unit: m). For general bicycles, the weight of the woven fabric may be, for example, 30 g or lower, more preferably 20 g or lower, and even more preferably 10 g or lower and may be, for example, 5 g or greater.

In order to achieve both puncture resistance and thinness, the woven fabric may have a thickness from, for example, about 0.10 to 1.00 mm, preferably from about 0.15 to 0.80 mm, and more preferably from about 0.20 to 0.60 mm.

The woven fabric may have a tensile strength of preferably 1300 N/3 cm or greater and more preferably 1500 N/3 cm or greater in at least one of longitudinal and transversal directions (preferably, the direction in which the tensile strength is higher), where the woven fabric is a plain weave woven fabric. In the present invention, since the woven fabric is made of the PVA-series fiber yarns having a specific average single fiber diameter, it is possible to enhance puncture resistance, even if the woven fabric does not have a tensile strength as high as that of a woven fabric made of so-called high-strength super fibers. Therefore, the woven fabric may have a tensile strength of, for example, 2800 N/3 cm or lower, or 2500 N/3 cm or lower. The tensile strength of the woven fabric may be measured in accordance with the method described for the Examples below.

The obtained woven fabric may be directly used as a reinforcing ply, or, if needed, the woven fabric (i) may be subjected to pretreatment, such as resorcinol formaldehyde latex (RFL) treatment to be used as a reinforcing ply, and/or (ii) may be provided with a rubber layer on at least one surface of the woven fabric to be used as a reinforcing ply.

The RFL treatment can be performed by immersing the woven fabric into a solution for RFL treatment (or RFL solution) or applying the RFL solution to the woven fabric. The RFL solution may have resorcinol and formaldehyde in a molar ratio of R (resorcinol)/F (formaldehyde) in a range from, for example, 1.0/1.0 to 1.0/4.5, preferably from 1.0/1.3 to 1.0/3.5, and more preferably from 1.0/1.5 to 1.0/2.0. Further, a weight ratio of RF (resorcinol and formaldehyde)/L (latex) may be in a range from, for example, 1/2 to 1/8, preferably from 1/3 to 1/7, and more preferably from 1/4 to 1/6.

Various types of rubber latex may be used as the latex, including, for example, natural rubber latex, styrene-butadiene rubber latex, acrylonitrile-butadiene rubber latex, chloroprene rubber latex, vinyl pyridine-styrene-butadiene rubber latex, and ethylene-propylene-nonconjugated diene terpolymer rubber latex. These types of rubber latex may be used singly or in combination. Among these, it is preferred to use styrene-butadiene rubber latex or vinyl pyridine-styrene-butadiene terpolymer rubber latex.

It should be noted that preprocessing may be performed using an epoxy compound and/or an isocyanate compound prior to the RFL treatment, if needed. In such preprocessing, the epoxy compound and/or the isocyanate compound may be applied by mixing a known or conventional compound into an organic solvent and immersing the woven fabric into the obtained treatment solution or coating the solution to the woven fabric.

Where the woven fabric in combination with a rubber layer(s) is used as a reinforcing ply, the rubber layer may be provided to, for example, only one surface or both surfaces of the woven fabric. The rubber layer may be, for example, in the form of a sheet-like product having a thickness in a range from about 0.10 to 1.50 mm, preferably from about 0.20 to 1.30 mm, and even more preferably from about 0.30 to 1.20 mm. The rubber layer preferably covers the whole woven fabric.

Examples of rubber constituting the rubber layer may include natural rubber, styrene-butadiene rubber, acrylonitrile-butadiene rubber, chloroprene rubber, vinyl pyridine-styrene-butadiene rubber, and ethylene-propylene-nonconjugated diene terpolymer rubber as a single body or a blend of two or more rubbers. The rubber is preferably a vulcanizable rubber. From the viewpoint of adhesive property, the rubber layer is preferably a layer of vulcanized rubber that is heated under pressure.

Where the reinforcing ply comprises a RFL-treated woven fabric in combination with a rubber layer(s), the rubber latex used in the RFL treatment may be the same type as the rubber(s) of the rubber layer(s), or may be different type from the rubber(s) of the rubber layers. Preferably, the rubber latex used in the RFL treatment may be the same type as the rubber(s) of the rubber layer(s).

Where the rubber layer is provided, the reinforcing ply including the woven fabric and the rubber layer(s) may have a total thickness, for example, in a range from 0.20 to 3.50 mm, preferably from 0.40 to 3.00 mm, and even more preferably from 0.60 to 2.50 mm.

For example, where a specimen is prepared by superposing unvulcanized rubber sheets on both surfaces of the woven fabric and heating the superposed material under pressure to make the rubber sheets vulcanized, the specimen (15 cm long × 15 cm wide, about 2 mm thick) in which the rubber sheets are integrated to the woven fabric may have a maximum load of, for example, preferably 13 N or higher, more preferably 14 N or higher, and even more preferably 15 N or higher in the penetration test in which an injection needle (diameter of the needle: 1.2 mm; angle of a blade surface at a tip end portion: 12 degree) is applied to the center of the woven fabric in the condition that the periphery of the specimen, excluding a circle having a diameter of 3 mm at the center of the specimen, is fixed. The maximum load may also be 30 N or lower, or 25 N or lower. The maximum load may be measured in accordance with the method described for the Examples below. It should be noted that the specimen is heated under pressure in a mold so as to have a thickness adjusted to about 2 mm (2.0 to 2.2 mm).

### Bicycle Tire

A bicycle tire according to the present invention at least comprises: a tread part provided to a ground contact surface of the bicycle tire; and a carcass part provided inside the tread part, wherein the bicycle tire comprises the reinforcing ply in at least one position selected from between the tread part and the carcass part, inside the carcass part, and inside the tread part. The bicycle tire may have a thickness, for example, from 1 to 10 mm where the thickness of the bicycle tire is measured at the ground contact surface.

The tread part is typically made of rubber. The carcass part at least includes a woven fabric, and if necessary, the woven fabric may be surrounded by a rubber layer(s) as a cover. The rubber constituting the rubber layer of the reinforcing ply may be the same type as the rubber(s) constituting the tread part and/or the carcass part, or may be different type from the rubber(s) constituting the tread part and/or the carcass part. Preferably, the rubber constituting the rubber layer of the reinforcing ply may be the same type as the rubber(s) constituting the tread part and/or the carcass part.

The reinforcing ply is preferably disposed such that a direction of the warps of the woven fabric is diagonal to a center line of the tire in a circumferential direction. The direction of the warps of the woven fabric may be angled relative to the center line at an angle, for example, from 30 to 60° and preferably 40 to 50°.

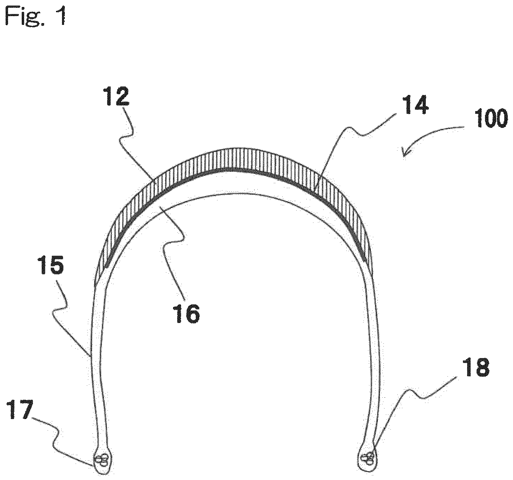

Hereinafter, embodiments of the bicycle tire of the present invention will be described with reference to the drawings. It should be noted that the present invention is not limited to the illustrated embodiments. In Figs. 1 to 3, like reference numerals are used to denote like features, and description thereof is omitted.

Fig. 1 shows a schematic sectional view of a bicycle tire according to a first embodiment of the present invention. As shown in Fig. 1, a bicycle tire 100 according to the first embodiment of the present invention includes: a tread part 12 configured to be in contact with the ground; and a carcass part 16 that is a frame part of the tire. The carcass part 16 is provided under the tread part 12 towards a direction of a rotary shaft of the bicycle tire, and the reinforcing ply 14 is disposed between the tread part 12 and the carcass part 16.

The carcass part 16 may be, for example, formed in such a way that one or more layers of carcass woven fabrics are covered by a rubber layer(s) each having a predetermined thickness. If needed, the carcass woven fabric(s) may embrace bead wires 18 at opposite ends of the carcass part 16. Examples of the bead wires 18 may include metal wires, and ropes organic-fiber or inorganic-fiber ropes.

For example, the bicycle tire 100 shown in Fig. 1 is a skin sidewall tire, and the carcass part 16 includes: sidewall parts 15 that are side surfaces of the tire; and bead parts 17 that are fixing parts to a rim (not illustrated). In the bead parts 17, opposite parts of the carcass woven fabric (not illustrated) constituting the carcass part 16 embrace the bead wires 18, respectively, and the carcass woven fabric and the bead wires 18 are integrated by allowing them to be covered with rubber from outside to form the bead parts 17.

Although the tread part 12 only needs to be provided to a portion that comes into direct contact with the road, it may extend toward the sidewall parts 15, if needed. In terms of weight reduction, it is preferable that the tread part is principally provided to the ground contact part of the tire. The tread part may have extended parts toward each sidewall part in a width direction, in which each of the extended part has a width of equal to or smaller than a half of the width of the sidewall part.

Where the reinforcing ply 14 is superposed outside the carcass part 16 and inside the tread part 12 (i.e., where the reinforcing ply 14 is superposed between the carcass part 16 and the tread part 12) the reinforcing ply 14 is preferably provided within a range smaller than the width of the tread part such that the reinforcing ply is substantially centered at the center line of the tire shown in Fig. 1 in the circumferential direction. For example, the reinforcing ply may have a width in a range from 70 to 100% of the width of the tread part, preferably from 75 to 98%, and more preferably from 80 to 95%. It should be noted that each of these widths refers to a length between opposite ends of the tire shown in Fig. 1 in the circumferential direction.

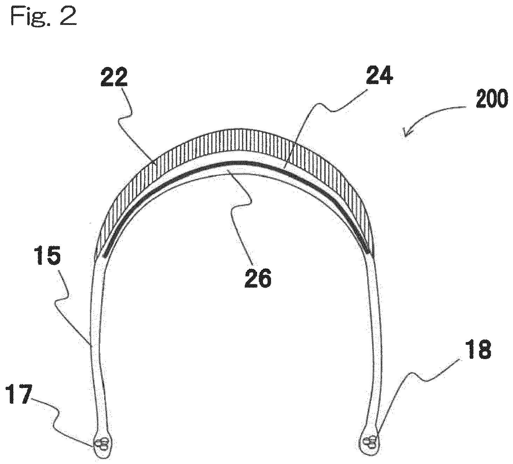

Fig. 2 shows a schematic sectional view of a bicycle tire according to a second embodiment of the present invention. As shown in Fig. 2, a bicycle tire 200 according to the second embodiment of the present invention includes: a tread part 22 configured to be in contact with the ground; and a carcass part 26 that is a frame part of the tire. The reinforcing ply 24 is disposed inside the carcass part 26.

The carcass part 26 may include a plurality of carcass woven fabrics (not illustrated) in at least a position where the reinforcing ply is disposed. In such a case, the reinforcing ply 24 may be interposed between the carcass woven fabrics inside the carcass part 26. Preferably, the reinforcing ply 24 is provided inside the carcass part 26 such that the reinforcing ply is substantially centered at the center line of the tire shown in Fig. 2 in the circumferential direction. For example, the reinforcing ply may have a width in a range from 70 to 200% of the width of the tread part, preferably from 75 to 150%, and more preferably from 80 to 130%. It should be noted that each of these widths refers to a length between opposite ends of the tire shown in Fig. 2 in the circumferential direction.

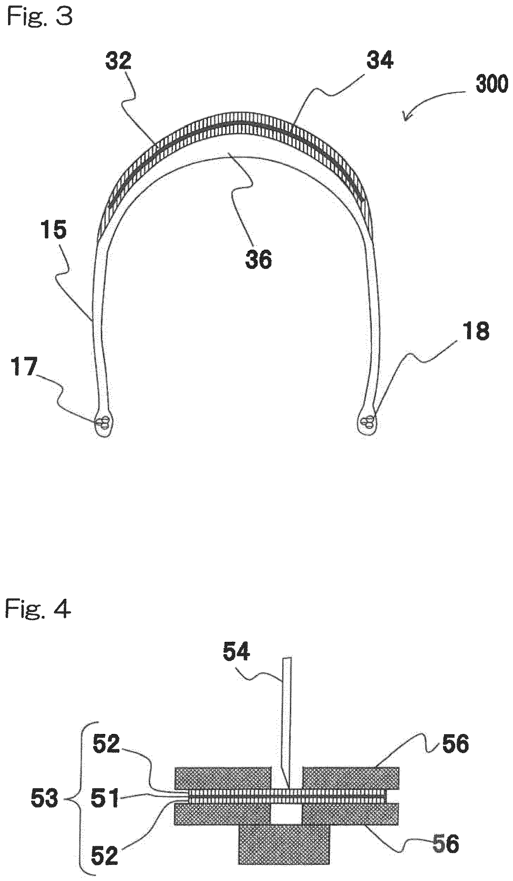

Fig. 3 shows a schematic sectional view of a bicycle tire according to a third embodiment of the present invention. As shown in Fig. 3, a bicycle tire 300 according to the third embodiment of the present invention includes: a tread part 32 configured to be in contact with the ground; and a carcass part 36 that is a frame part of the tire. The reinforcing ply 34 is disposed inside the tread part 32.

The reinforcing ply 34 may be provided inside the tread part 32 such that the reinforcing ply is substantially centered at the center line of the tire shown in Fig. 3 in the circumferential direction. For example, the reinforcing ply 34 may have a width in a range from 60 to 95% of the width of the tread part, preferably from 65 to 90%, and more preferably from 70 to 85%.

Where the tread part 32 is provided with groove parts, the reinforcing ply 34 is preferably disposed to such an extent that the reinforcing ply 34 is not exposed outside the groove part.

### EXAMPLE

Hereinafter, the present invention will be further described in detail with reference to Examples, which are not to be construed as limiting the scope of the present invention. In the following Examples and Comparative Examples, various physical properties were measured by the following methods.

### Average Fiber Diameter

Using a scanning electron microscope (SEM), cross sections of 5 fiber yarns that were randomly sampled from warps and wefts of a woven fabric were observed to take an SEM image of each of the yarns in the cross section magnified by 1000 times. In the SEM image, fiber diameters of each single fiber per fiber yarn were measured at 20 locations that were randomly selected for each fiber to calculate an average fiber diameter.

### Fineness (dtex)

In accordance with section 8.9.1 of JIS L 1096 "Testing methods for general woven fabrics," a total fineness of PVA-series fiber yarns was measured.

### Fiber tenacity (cN/dtex)

In accordance with section 8.5 of JIS L 1013 "Testing methods for chemical fiber filament yarns," a fiber tenacity was measured.

### Warp Density (yarns/2.54 cm)

In accordance with section 8.6.1 of JIS L 1096 "Testing methods for general woven fabrics," a warp density of a woven fabric was measured.

### Basis Weight (g/m²)

In accordance with section 8.3.2 of JIS L 1096 "Testing methods for general woven fabrics," a basis weight of a woven fabric was measured.

### Thickness (mm)

In accordance with section 8.4 of JIS L 1096 "Testing methods for general woven fabrics," a thickness of a woven fabric was measured.

### Tensile Strength (N/3 cm)

In accordance with section 8.12.1 of JIS L 1096 "Testing methods for general woven fabrics," a tensile strength of a woven fabric was measured for a test piece having a width of 3 cm.

### Maximum Load to Woven fabric

A specimen (15 cm long × 15 cm wide, 2 mm thick) was obtained by preparing a woven fabric and unvulcanized rubber sheets each having a thickness of 1 mm and containing sulfur (containing natural rubber (RSS#3) and SBR rubber (commercial name "Nipol 1500") mixed at a weight ratio of 1/1); arranging the rubber sheets on both sides of the woven fabric; placing the woven fabric and the rubber sheets in a mold capable of producing a specimen having a thickness of 2 mm; and heating them at a temperature of 150°C and pressure of 50 kg/cm² for 30 minutes such that the rubber sheets were vulcanized and bonded to the woven fabric by thermocompression to be integrated together. The woven fabric used was previously subjected to the RFL treatment (the molar ratio of R/F: 1/1.7; the weight ratio of RF/L: 1/5). As for Vectran and Kevlar, pretreatment with an isocyanate compound was performed prior to the RFL treatment. A penetration test was performed to the obtained specimen, using a constant-speed penetration test machine provided with an injection needle (diameter: 18G in which outer diameter of the needle of 1.2 mm; length: 38 mm; needle tip shape: regular bevel in which angle of a blade surface at a tip end portion of 12 degree) as shown in Fig. 4.

Fig. 4 shows a schematic partial sectional view of the constant-speed penetration test machine. A specimen 53 includes: a woven fabric 51 and vulcanized rubber layers 52, 52 on upper and lower surfaces of the woven fabric 51. The constant-speed penetration test machine includes: an injection needle 54 that moves down at a constant speed, and fixing plates 56, 56 that fix the specimen 53 on the upper and lower surfaces, respectively. The periphery of the specimen 53, excluding a circle having a diameter of 3 mm at the center of which the injection needle 54 penetrates, is fixed with the fixing plates 56, 56. A force with which the injection needle 54 moving down at a speed of 5 cm per minute penetrated the specimen 53 was measured as a maximum load.

### Example 1

A plain weave fabric was prepared from vinylon filaments (500 dtex/200 f; 10.2 cN/dtex; average single fiber diameter: 16 µm; the number of twists: 200 T/m; manufactured by Kuraray Co., Ltd.) as PVA-series fiber yarns for warps (yarns that run lengthwise) and wefts (yarns that run from side to side). The obtained plain weave fabric had a warp density of 51 yarns/2.54 cm, a basis weight of 167 g/m², and a thickness of 0.32 mm. Tables 1 and 2 show performance evaluation of the obtained plain weave fabric.

### Example 2

A cord fabric was prepared from vinylon filaments (500 dtex/200 f; 10.2 cN/dtex; average single fiber diameter: 16 µm; the number of twists: 200 T/m; manufactured by Kuraray Co., Ltd.) as PVA-series fiber yarns for warps (yarns that run lengthwise) and wefts (yarns that run from side to side). The obtained cord fabric had a warp density of 77 yarns/2.54 cm, a basis weight of 142 g/m², and a thickness of 0.22 mm. Table 1 shows performance evaluation of the obtained cord fabric.

### Comparative Example 1

A plain weave fabric was prepared from Vectran filaments (560 dtex/27 f; 22.9 cN/dtex; average single fiber diameter :43 µm; the number of twists: 100 T/m; manufactured by Kuraray Co., Ltd.) as liquid crystal polyester-series fiber yarns for warps (yarns that run lengthwise) and wefts (yarns that run from side to side). The obtained plain weave fabric had a warp density of 47 yarns/2.54 cm, a basis weight of 171 g/m², and a thickness of 0.29 mm. Table 1 shows performance evaluation of the obtained plain weave woven fabric.

### Comparative Example 2

A cord fabric was prepared from Vectran filaments (560 dtex/27 f; 22.9 cN/dtex; average single fiber diameter: 43 µm; the number of twists: 150 T/m; manufactured by Kuraray Co., Ltd.) as liquid crystal polyester-series fiber yarns for warps (yarns that run lengthwise) and wefts (yarns that run from side to side). The obtained cord fabric had a warp density of 70 yarns/2.54 cm, a basis weight of 145 g/m², and a thickness of 0.20 mm. Table 1 shows performance evaluation of the obtained cord fabric.

### Comparative Example 3

A plain weave fabric was prepared from nylon 66 filaments (470 dtex/72 f; 9.2 cN/dtex; average single fiber diameter: 27 µm; the number of twists: 150 T/m; manufactured by Toray Industries, Inc.) as polyamide-series fiber yarns for warps (yarns that run lengthwise) and wefts (yarns that run from side to side). The obtained plain weave fabric had a warp density of 54 yarns/2.54 cm, a basis weight of 165 g/m², and a thickness of 0.36 mm. Table 1 shows performance evaluation of the obtained plain weave fabric.

### Comparative Example 4

A plain weave fabric was prepared from Kevlar filaments (440 dtex/267 f; 20.4 cN/dtex; average single fiber diameter: 12 µm; the number of twists: 150 T/m; manufactured by Du Pont-Toray Co. Ltd.) as aromatic polyamide-series fiber yarns for warps (yarns that run lengthwise) and wefts (yarns that run from side to side). The obtained plain weave fabric had a warp density of 58 yarns/2.54 cm, a basis weight of 166 g/m², and a thickness of 0.30 mm. Table 1 shows performance evaluation of the obtained plain weave fabric.

**[Table 1]**

| Fiber | Ex.1 | Ex. 2 | Com. Ex. 1 | Com. Ex. 2 | Com. Ex. 3 | Com. Ex. 4 |
|---|---|---|---|---|---|---|
| | Vinylon | Vinylon | Vectran | Vectran | Nylon | Kevlar |
| Fiber tenacity (cN/dtex) | 10.2 | 10.2 | 22.9 | 22.9 | 9.2 | 20.4 |
| Average single fiber diameter (µm) | 16 | 16 | 43 | 43 | 27 | 12 |
| Fabric weave | Plain | Cord | Plain | Cord | Plain | Plain |
| Warp density (yarns/2.54 cm) | 51 | 77 | 47 | 70 | 54 | 58 |
| Longitudinal tensile strength (N/3 cm) | 2315 | 77 | 4822 | 70 | 2218 | 4165 |
| Basis weight (g/m²) | 167 | 142 | 171 | 145 | 165 | 166 |
| Thickness (mm) | 0.32 | 0.22 | 0.29 | 0.20 | 0.36 | 0.30 |
| Maximum load (N) | 16.3 | 14.2 | 13.6 | 10.9 | 10.9 | 14.9 |

As shown in Table 1, when Example 1 is compared with Comparative Examples 1, 3 and 4, although these are all plain weave fabrics and have similar basis weights, Example 1 shows a higher maximum load for penetration than those of Comparative Examples 1, 3 and 4, exhibiting better puncture resistance. In particular, it is surprising that, despite that the fiber tenacity of the fiber yarns of Example 1 is only half or less of the fiber tenacities of the fiber yarns of Comparative Examples 1 and 4, the woven fabric of Example 1 has improved puncture resistance than those in Comparative Examples 1 and 4.

Likewise, when Example 2 is compared with Comparative Example 2 both of which are cord fabrics, despite that the fiber tenacity of the fiber yarns of Example 2 is only half or less of the fiber tenacity of the fiber yarns of Comparative Example 2, Example 2 had a higher maximum load for penetration, exhibiting improved puncture resistance.

### Example 3

A plain weave fabric was prepared from vinylon filaments (500 dtex/50 f; 9.5 cN/dtex; average single fiber diameter: 32 µm; the number of twists: 200 T/m; manufactured by Kuraray Co., Ltd.) as PVA-series fiber yarns for warps (longitudinal yarns) and wefts (transverse yarns). The obtained plain weave fabric had a warp density of 51 yarns/2.54 cm, a basis weight of 165 g/m², and a thickness of 0.38 mm. Table 2 shows performance evaluation of the obtained plain weave fabric.

### Example 4

In cases where a woven fabric is prepared in the same way as that of Example 1, except for using PVA-series fiber yarns having been subjected to taslanizing, it is presumed that puncture resistance would be enhanced because bulk texturing can reduce gaps between yarns in the woven fabric.

### Comparative Example 5

A plain weave fabric was prepared from vinylon filaments (500 dtex/20 f; 9.4 cN/dtex; average single fiber diameter: 50 µm; the number of twists: 200 T/m; manufactured by Kuraray Co., Ltd.) as PVA-series fiber yarns for warps (longitudinal yarns) and wefts (transverse yarns). The obtained plain weave fabric had a warp density of 51 yarns/2.54 cm, a basis weight of 161 g/m², and a thickness of 0.45 mm. Table 2 shows performance evaluation of the obtained plain weave fabric.

### Example 5

A plain weave fabric was prepared from vinylon filaments (500 dtex/1000 f; 9.1 cN/dtex; average single fiber diameter: 7 µm; the number of twists: 200 T/m; manufactured by Kuraray Co., Ltd.) as PVA-series fiber yarns for warps (longitudinal yarns) and wefts (transverse yarns). The obtained plain weave fabric had a warp density of 51 yarns/2.54 cm, a basis weight of 167g/m², and a thickness of 0.32 mm. Table 2 shows performance evaluation of the obtained plain weave fabric.

### Example 6

A plain weave fabric was prepared from vinylon filaments (500 dtex/200 f; 10.2 cN/dtex; average single fiber diameter: 16 µm; the number of twists: 200 T/m; manufactured by Kuraray Co., Ltd.) as PVA-series fiber yarns for warps (longitudinal yarns) and wefts (transverse yarns). The obtained plain weave fabric had a warp density of 41 yarns/2.54 cm, a basis weight of 134 g/m², and a thickness of 0.30 mm. Table 2 shows performance evaluation of the obtained plain weave fabric.

**[Table 2]**

| Fiber | Ex. 1 | Ex. 3 | Ex. 5 | Ex. 6 | Com. Ex. 5 |
|---|---|---|---|---|---|
| | Vinylon | Vinylon | Vinylon | Vinylon | Vinylon |
| Fineness/the number of fi laments (dtex/f) | 500/200 | 500/50 | 500/1000 | 500/200 | 500/20 |
| Average single fiber diameter (µm) | 16 | 32 | 7 | 16 | 50 |
| Fabric weave | Plain | Plain | Plain | Plain | Plain |
| Warp density (yarns/2.54 cm) | 51 | 51 | 51 | 41 | 51 |
| Basis weight (g/m²) | 167 | 165 | 167 | 134 | 161 |
| Thickness (mm) | 0.32 | 0.38 | 0.32 | 0.30 | 0.45 |
| Maximum load (N) | 16.3 | 14.2 | 14.5 | 13.2 | 10.5 |

Comparing Examples 1, 3, 5 and 6 with Comparative Example 5, Comparative Example 5 was deteriorated in puncture resistance. From visual observation of the woven fabrics, it was found that Comparative Example 5 had gaps in the weave pattern of the woven fabric due to the large single fiber diameter, whereas Examples 1, 3, 5 and 6 did not generate visible gaps in the weave pattern of the woven fabric. Accordingly, it is presumed that a sharp injection needle easily enters a visible gap occurring in the woven fabric in Comparative Example 5 having poor puncture resistance.

### INDUSTRIAL APPLICABILITY

The reinforcing ply (plies) of the present invention can be advantageously used to enhance puncture resistance of a bicycle tire and can be suitably applied to bicycle tires of various bicycles, including city cycles, electrically assisted bicycles, road racing bicycles, mountain bikes, hybrid bicycles (comfort bicycles), touring bicycles, recumbent bicycles, and foldable bicycles.

Although the preferred embodiments of the present invention have been described with reference to the drawings, various additions, modifications, or deletions may be made without departing from the scope of the invention as defined by the appended claims.

### [Reference Numerals]

100, 200, 300 .... bicycle tire
12, 22, 32 .... tread part
14, 24, 34 .... reinforcing ply
16, 26, 36 .... carcass part
15 ···· sidewall part
17 ···· bead part
18 .... bead wire

## Claims

1. A bicycle-tire reinforcing ply (14, 24, 34) at least comprising a woven fabric that comprises polyvinyl alcohol-series fiber yarns, wherein each of the yarns includes a plurality of single fibers having an average fiber diameter of 45 µm or smaller.

2. The reinforcing ply (14, 24, 34) according to claim 1, wherein the woven fabric has a basis weight of at least 100 g/m².

3. The reinforcing ply (14, 24, 34) according to claim 1 or 2, wherein the woven fabric is a plain weave fabric or a cord fabric.

4. A bicycle tire (100, 200, 300) at least comprising: a tread part (12, 22, 32) provided to a ground contact surface of the bicycle tire (100, 200, 300); and a carcass part (16, 26, 36) provided inside the tread part (12, 22, 32), wherein the bicycle tire (100, 200, 300) comprises a reinforcing ply (14, 24, 34) as recited in any one of claims 1 to 3 in at least one position selected from between the tread part (12, 22, 32) and the carcass part (16, 26, 36), inside the carcass part (16, 26, 36), and inside the tread part (12, 22, 32).

## Patentansprüche

1. Fahrradreifenverstärkungseinlage (14, 24, 34), die mindestens ein Gewebe umfasst, das Fasergarne der Polyvinylalkoholserie umfasst, wobei jedes der Garne eine Mehrzahl von Einzelfasern mit einem durchschnittlichen Faserdurchmesser von 45 µm oder weniger einschließt.

2. Verstärkungseinlage (14, 24, 34) nach Anspruch 1, wobei das Gewebe ein Basisgewicht von mindestens 100 g/m² aufweist.

3. Verstärkungseinlage (14, 24, 34) nach Anspruch 1 oder 2, wobei das Gewebe ein Leinwandbindungsgewebe oder ein Cordgewebe ist.

4. Fahrradreifen (100, 200, 300), der mindestens umfasst: ein Laufflächenteil (12, 22, 32), das an einer Bodenkontaktoberfläche des Fahrradreifens (100, 200, 300) bereitgestellt ist; und ein Karkassenteil (16, 26, 36), das auf der Innenseite des Laufflächenteils (12, 22, 32) bereitgestellt ist, wobei der Fahrradreifen (100, 200, 300) eine in einem der Ansprüche 1 bis 3 beschriebene Verstärkungseinlage (14, 24, 34) in mindestens einer Position, ausgewählt aus zwischen dem Laufflächenteil (12, 22, 32) und dem Karkassenteil (16, 26, 36), innerhalb des Karkassenteils (16, 26, 36) und innerhalb des Laufflächenteils (12, 22, 32), umfasst.

## Revendications

1. Nappe de renforcement pour pneu de bicyclette (14, 24, 34) comprenant au moins un tissu qui comprend des fils de fibre de la série des alcools de polyvinyle, dans lequel chacun des fils comprend une pluralité de fils uniques présentant un diamètre moyen de fibre de 45 µm ou plus petit.

2. Nappe de renforcement (14, 24, 34) selon la revendication 1, dans laquelle le tissu présente un poids de base d'au moins 100 g/m².

3. Nappe de renforcement (14, 24, 34) selon la revendication 1 ou 2, dans laquelle le tissu est un tissu à armure uni ou un velours côtelé.

4. Pneu de bicyclette (100, 200, 300) comprenant au moins : une partie de bande de roulement (12, 22, 32) située sur une surface en contact avec le sol du pneu de bicyclette (100, 200, 300) ; et une partie de carcasse (16, 26, 36) prévue à l'intérieur de la partie de bande de roulement (12, 22, 32), dans lequel le pneu de bicyclette (100, 200, 300) comprend une nappe de renforcement (14, 24, 34) selon l'une quelconque des revendications 1 à 3 dans au moins une position sélectionnée parmi : entre la partie de bande de roulement (12, 22, 32) et la partie de carcasse (16, 26, 36), à l'intérieur de la partie de carcasse (16, 26, 36) et à l'intérieur de la partie de bande de roulement (12, 22, 32).
